# EUROPEAN PATENT APPLICATION

(11) **EP 4 521 045 A2**
(43) Date of publication of application: **12.03.2025**
(21) Application number: 24194207.7
(22) Date of filing: 12.08.2024
(51) Int. Cl.: F25J 1/00

(54) **APPARATUS AND PROCESS FOR PRE-LIQUEFACTION FLUID PROCESSING FOR IMPROVED LIQUEFACTION OPERATIONS**

(30) Priority: 16.08.2023 US 202318234620
(71) Applicant: Air Products and Chemicals, Inc., Allentown, PA 18106 (US)
(72) Inventor: ESPIE, David M, Lansdale, 19446 (US); MISRA, Pratik, Breinigsville, 18031 (US); KRISHNAMURTHY, Gowri, Sellersville, 18960 (US)
(74) Representative: Beck Greener LLP

(57) **Abstract**

An apparatus and process for pre-liquefaction processing of a fluid (e.g., hydrogen) can permit a reduction in capital costs and also an improvement in operational efficiency in flexibility. Embodiments can be configured to account for large variations in feed to be provided for liquefaction and also permit capital cost reductions associated with pre-liquefaction processing so the overall capital cost for liquefaction can be greatly reduced while also providing improved operational flexibility. For instance, embodiments can be configured to utilize one or more common pre-liquefaction processing elements to treat a fluid for precooling of a fluid to a pre-selected liquefaction feed temperature.

## Description

The present innovation relates to systems, apparatuses and processes for providing pre-liquefaction processing of a fluid (*e.g*., hydrogen gas) to cool the fluid to a pre-selected pre-liquefaction temperature suitable for undergoing liquefaction *via* liquefiers.

Hydrogen production can be provided by use of one or more electrolyzers. The electrolyzers can produce hydrogen from water *via* electrolysis. U.S. Patent Application Publication Nos. 2022/0290309 and 2022/0033983 discloses and example of hydrogen production *via* one or more electrolyzers in which the produced hydrogen gas can be hydrogen gas can be liquefied by cryogenic cooling. Examples of hydrogen liquefaction can be found in U.S. Patent Nos. 7,559,213, 4,765,813, and 3,095,274. Hydrogen production that relies on renewable power sources to power operation of various production units can be considered green hydrogen manufacturing.

We determined that a new process and apparatus for liquefaction of hydrogen gas can be desired to provide improved operational flexibility to account for large variances in hydrogen production that can occur in green hydrogen production due to the inconsistent availability of power for powering operation of the hydrogen production processing (*e.g*., due to the lack of availability of renewable power from a renewable power source such as, for example, solar power, wind power, *etc.* For example, we determined that liquefaction of hydrogen gas can be substantially improved upon to reduce capital costs associated with the cryogenic cooling and liquefaction of the gas to provide a significant improvement in operational efficiency that can also reduce power consumption significantly. The reduced power consumption can permit a higher production rate of hydrogen for a given supply of power and/or a lower cost production process that can provide a more economical, and more energy efficient processing to occur. This type of improvement can further enhance utilization of renewable energy that can help avoid or minimize carbon based energy systems for powering operation of hydrogen production facilities.

For example, a conventional liquefaction device, or liquefier, can include a number of elements that include cooling medium compression, refrigerant storage, refrigerant phase separation, feed fluid compression, an initial cold box for cooling of the fluid, and a liquefier that liquefies the cooled fluid output from the cold box and a liquefaction cooler that further cools the cooled fluid output from the cold box to liquefy the fluid. The liquefaction cooler can include a plurality of expanders, a heat exchanger, at least one phase separator, and a plurality of ortho-hydrogen to para- hydrogen converters. We determined that such devices can be adjusted so that a liquefaction device may only include some of these elements for liquefaction while other elements can be provided upstream for feeding pre-cooled fluid to one or more liquefiers of a train of liquefiers. We surprisingly found that the utilization of common pre-cooling elements can be provided to better account for inconsistent rates of hydrogen production and provide a more efficient and flexible array of liquefaction processing options.

For example, in some embodiments, each liquefier of a train of liquefiers can receive pre-cooled feed from an upstream cold box heat exchanger. However, cooling medium storage, cooling medium phase separation, cooling medium compressors and/or hydrogen feed compressors for feeding the cooling medium and hydrogen to the upstream cold box heat exchanger can be positioned so that the different cold box heat exchangers receive the cooling medium and/or the hydrogen feed from the same common set of cooling medium compressors and/or hydrogen feed compressors.

As another example, a common pre-treatment device (*e.g*., a common pre-purification unit, or PPU) can also be provided for pre-treating the feed of hydrogen prior to the hydrogen undergoing pre-cooling. As yet another example, a train of liquefiers or a subset of liquefiers in a train of liquefiers can receive cooled fluid from the same upstream cold box heat exchanger, which may also receive the cooling medium and feed from common cooling medium compressors and/or hydrogen feed compressors. As noted above, a common upstream pre-treatment device can also be utilized in such embodiments.

Embodiments can be provided to permit greater operational flexibility that can permit liquefaction by multiple liquefiers to receive a feed from a common set of pre-liquefaction treatment devices so the liquefier feed of hydrogen is at a suitable liquefaction feed temperature for undergoing liquefaction while also permitting a more efficient utilization of those common units and the liquefiers. In some embodiments, it was surprisingly found that energy efficiency improvements of between 2% and 10% can be provided, which can provide a significant improvement. For example, this type of improvement can be equivalent to 2 MW to 10 MW for an embodiment included in a facility that may require 100 MW of power, which can provide an improvement in operational efficiency that equates to millions of dollars of value in terms of increased efficiency in hydrogen production and/or reduction in energy usage while also providing an improvement in operational flexibility.

In a first aspect, an apparatus for liquefaction of hydrogen can include a pre-liquefaction processing system positioned to receive at least one flow of feed comprising hydrogen gas to cool the at least one flow of feed to form at least one pre-cooled flow of feed at a temperature within a pre-selected liquefaction feed temperature range for feeding the at least one pre-cooled flow of feed to a plurality of liquefiers of a train of liquefiers. The pre-liquefaction processing system can include a cooling medium unit (CMU) positioned upstream of at least one heat exchanger to feed a cooling medium to the at least one heat exchanger for cooling of the at least one flow of feed to form the at least one pre-cooled flow of feed. The at least one heat exchanger can be positioned between the liquefiers and a source of the feed to receive the at least one flow of feed for cooling the at least one flow of feed *via* the cooling medium.

The feed of hydrogen gas can be substantially hydrogen gas. For example, the feed can include at least 98 volume percent (vol%) hydrogen or at least 98 mole precent (mol%) hydrogen, *e.g*., between 98 vol% and 100 vol% hydrogen (*i.e*., in a range from 98 vol% to 100 vol%) or between 98 mol% hydrogen and 100 mol% hydrogen (*i.e*., in a range from 98 mol% to 100 mol%). Other embodiments can utilize other feeds that are comprised mostly of hydrogen (*e.g*., between 95 vol% and 100 vol% hydrogen, *etc.* (*i.e.,* in a range from 95 vol% to 100 mol% hydrogen).

In some embodiments, the pre-selected liquefaction feed temperature range can be a temperature of between -170°C and -200°C and the temperature within this range can be -170°C, -180°C, -190°C, or -200°C, for example. Other embodiments can utilize another suitable pre-selected liquefaction feed temperature range.

In some embodiments, the cooling medium can include nitrogen or other suitable cooling medium (*e.g*., a cryogenic fluid, a refrigerant, *etc.*)*.*

In a second aspect, the apparatus can be configured so that the at least one pre-cooled flow of feed is comprised entirely of gas or is comprised of at least 95 volume percent (vol%) gas and no more than 5 vol% liquid.

In a third aspect, the at least one heat exchanger of the apparatus can include a first heat exchanger and the at least one pre-cooled flow of feed can include a first pre-cooled flow of feed output from the first heat exchanger.

In a fourth aspect, the plurality of liquefiers of the train of liquefiers can include a first liquefier and a second liquefier and a first heat exchanger of the at least one heat exchanger can be connected to the first liquefier and the second liquefier such that a first portion of the first pre-cooled flow of feed outputtable from the first heat exchanger is feedable to the first liquefier and a second portion of the first pre-cooled flow of feed outputtable from the first heat exchanger is feedable to the second liquefier.

In a fifth aspect, the plurality of liquefiers of the train of liquefiers can include a first liquefier, a second liquefier, and a third liquefier and a first heat exchanger of the at least one heat exchanger can be connected to the first liquefier, the second liquefier, and the third liquefier such that a first portion of the first pre-cooled flow of feed outputtable from the first heat exchanger is feedable to the first liquefier, a second portion of the first pre-cooled flow of feed outputtable from the first heat exchanger is feedable to the second liquefier, and a third portion of the first pre-cooled flow of feed outputtable from the first heat exchanger is feedable to the third liquefier.

In a sixth aspect, the at least one heat exchanger of the apparatus can include multiple heat exchangers that include a first heat exchanger and a second heat exchanger. The first heat exchanger can be positioned to receive a first portion of the at least one flow of feed and the second heat exchanger can be positioned to receive a second portion of the at least one flow of feed. The at least one pre-cooled flow of feed can include a first pre-cooled flow of feed outputtable from the first heat exchanger and a second pre-cooled flow of feed outputtable from the second heat exchanger.

The CMU can be positioned to feed the cooling medium to the first heat exchanger and the second heat exchanger. The first heat exchanger can be connected to a first liquefier of the plurality of liquefiers of the train of liquefiers to feed the first pre-cooled flow of feed outputtable from the first heat exchanger to the first liquefier. The second heat exchanger can be connected to a second liquefier of the plurality of liquefiers of the train of liquefiers to feed the second pre-cooled flow of feed outputtable from the second heat exchanger to the second liquefier.

In a seventh aspect, wherein the at least one heat exchanger can include a third heat exchanger positioned to receive a third portion of the at least one flow of feed and the at least one pre-cooled flow of feed can also include a third pre-cooled flow of feed outputtable from the third heat exchanger. The CMU can be positioned to feed the cooling medium to the third heat exchanger and the third heat exchanger can be connected to a third liquefier of the plurality of liquefiers of the train of liquefiers to feed the third pre-cooled flow of feed outputtable from the third heat exchanger to the third liquefier.

In an eighth aspect, the pre-liquefaction processing system can also include a pre-purification unit (PPU) positioned upstream of the at least one heat exchanger to purify the at least one flow of feed and/or a feed compression system positioned upstream of the at least one heat exchanger for compressing the at least one flow of feed to a pressure within a pre-selected range of feed pressures. For example, in some embodiments the pre-liquefaction processing system can includes the feed compression system and the PPU. As another example, in some embodiments the pre-liquefaction processing system can include only the feed compression system or only the PPU.

In a ninth aspect, the apparatus can also include other elements. For example, the apparatus can include at least one source of feed. The at least one source of feed can include a first source of feed comprising a hydrogen production facility that generates hydrogen gas *via* renewable power. The apparatus can also include the train of liquefiers in some embodiments.

In a tenth aspect, the apparatus of the first aspect can be combined with one or more features of any of the second aspect, third aspect, fourth aspect, fifth aspect, sixth aspect, seventh aspect, eighth aspect and/or ninth aspect to form yet other embodiments. It should therefore be appreciated that other embodiments of the apparatus can include other features or elements, which can include exemplary features of the example embodiments discussed herein.

In an eleventh aspect, a process for pre-cooling at least one flow of feed comprising hydrogen gas for providing pre-cooled hydrogen gas for liquefaction of the hydrogen gas is provided. Embodiments of our apparatus can be configured to implement an embodiment of our process. An example of the process for pre-cooling of at least one flow of feed comprising hydrogen gas for providing pre-cooled hydrogen gas for liquefaction of the hydrogen gas can include supplying a cooling medium from a common cooling medium unit (CMU) to at least one pre-liquefaction cooling device for cooling a feed comprising hydrogen gas *via* the at least one pre-liquefaction cooling device and cooling the hydrogen gas *via* the at least one pre-liquefaction cooling device with the cooling medium supplied by the CMU to provide a pre-cooled feed comprising hydrogen gas at a pre-selected liquefier feed temperature.

As noted above, the feed of hydrogen gas in embodiments of our process can be substantially hydrogen gas in some embodiments. For example, the feed can include at least 98 volume percent (vol%) hydrogen or at least 98 mole precent (mol%) hydrogen, e.g., between 98 vol% and 100 vol% hydrogen (*i.e*., in a range from 98 vol% to 100 vol% hydrogen) or between 98 mol% hydrogen and 100 mol% hydrogen (*i.e*., in a range from 98 mol% to 100 mol% hydrogen). Other embodiments can utilize other feeds that are comprised mostly of hydrogen, *e.g*., between 95 vol% and 100 vol% hydrogen, *etc.* (*i.e.,* in a range from 95 vol% to 100 vol% hydrogen, *etc.*)*.*

In some embodiments of our process, the pre-selected liquefaction feed temperature range can be a temperature of between -170°C and -200°C and the temperature within this range can be -170°C, -180°C, -190°C, or -200°C, for example. Other embodiments can utilize another suitable pre-selected liquefaction feed temperature range.

In some embodiments of our process, the cooling medium can include nitrogen or other suitable cooling medium (*e.g*., a cryogenic fluid, a refrigerant, *etc.*)*.*

In a twelfth aspect, embodiments of our process can also include feeding the pre-cooled feed to multiple liquefiers of a train of liquefiers for liquefaction of the hydrogen gas to form liquid hydrogen.

In a thirteen aspect, embodiments of our process can be configured for implementation where the at least one pre-liquefaction cooling device comprises a first heat exchanger. For instance, embodiments of our process can be configured so that the cooling of the hydrogen gas *via* the at least one pre-liquefaction cooling device with the cooling medium supplied by the CMU to provide the pre-cooled feed comprising hydrogen gas at a pre-selected liquefier feed temperature includes cooling at least a portion of the at least one flow of feed in the first heat exchanger *via* the cooling medium supplied from the CMU.

Also, the feeding of the pre-cooled feed to the multiple liquefiers of the train of liquefiers for liquefaction of the hydrogen gas to form liquid hydrogen can include feeding a first portion of the pre-cooled feed from the first heat exchanger to a first liquefier of the multiple liquefiers of the train of liquefiers and feeding a second portion of the pre-cooled feed from the first heat exchanger to a second liquefier of the multiple liquefiers of the train of liquefiers.

In a fourteenth aspect, embodiments of our process can also include implementation where the at least one pre-liquefaction cooling device comprises a first heat exchanger and a second heat exchanger. The cooling of the hydrogen gas *via* the at least one pre-liquefaction cooling device with the cooling medium supplied by the CMU to provide the pre-cooled feed comprising hydrogen gas at a pre-selected liquefier feed temperature can include cooling a first portion of the at least one flow of feed in the first heat exchanger *via* the cooling medium supplied from the CMU and cooling a second portion of the at least one flow of feed in the second heat exchanger *via* the cooling medium supplied from the CMU.

Also, the feeding of the pre-cooled feed to the multiple liquefiers of the train of liquefiers for liquefaction of the hydrogen gas to form liquid hydrogen can include feeding a first pre-cooled flow of feed output from the first heat exchanger to a first liquefier of the multiple liquefiers of the train of liquefiers and feeding a second pre-cooled flow of feed output from the second heat exchanger to a second liquefier of the multiple liquefiers of the train of liquefiers.

In a fifteenth aspect, embodiments of our process can also be implemented in embodiments where the at least one pre-liquefaction cooling device also includes a third heat exchanger. The cooling of the hydrogen gas *via* the at least one pre-liquefaction cooling device with the cooling medium supplied by the CMU to provide the pre-cooled feed comprising hydrogen gas at a pre-selected liquefier feed temperature can include cooling a third portion of the at least one flow of feed in the third heat exchanger *via* the cooling medium supplied from the CMU. Also, the feeding of the pre-cooled feed to the multiple liquefiers of the train of liquefiers for liquefaction of the hydrogen gas to form liquid hydrogen can include feeding a third pre-cooled flow of feed output from the third heat exchanger to a third liquefier of the multiple liquefiers of the train of liquefiers.

In a sixteenth aspect, the process can be configured for implementation in situations where the CMU and the at least one pre-liquefaction cooling device are included in a pre-liquefaction processing system positioned upstream of a train of liquefiers.

In some embodiments, the pre-liquefaction processing system can include other elements. For example, the pre-liquefaction processing system can also include a PPU and/or a feed compression system.

In a seventeenth aspect, the process can include compressing the hydrogen gas before the hydrogen gas is fed to the at least one pre-liquefaction cooling device and/or purifying the hydrogen gas before the hydrogen gas is fed to the at least one pre-liquefaction cooling device.

In an eighteenth aspect, the process can be configured so that the hydrogen gas of the at least one flow of feed is between 95 volume percent (vol%) of the at least one flow of feed and 100 vol% of the at least one flow of feed (*i.e*., in a range from 95 vol% to 100 vol% of that at least one flow of feed) and the hydrogen gas is provided *via* at least one hydrogen production facility that forms the hydrogen gas *via* at least one renewable power source.

In a nineteenth aspect, an embodiment of our apparatus can be configured to implement an embodiment of our process.

In a twentieth aspect, the process of the eleventh aspect can be combined with one or more features of any of the twelfth aspect, thirteenth aspect, fourteenth aspect, fifteenth aspect, sixteenth aspect, seventeenth aspect, eighteenth aspect and/or nineteenth aspect to form yet other embodiments. It should therefore be appreciated that other embodiments of our process can include other features or elements, which can include exemplary features of the example embodiments discussed herein.

It should be appreciated that embodiments of the process for pre-liquefaction processing and apparatus for pre-liquefaction processing can utilize various conduit arrangements and process control elements. For example, embodiments may utilize sensors (*e.g*., pressure sensors, temperature sensors, flow rate sensors, concentration sensors, *etc.*), controllers, valves, piping, and other process control elements. As another example, some embodiments can utilize an automated process control system and/or a distributed control system (DCS). Various different conduit arrangements and process control systems can be utilized to meet a particular set of design criteria.

Other details, objects, and advantages of our process for pre-liquefaction processing, system for hydrogen liquefaction, system for fluid liquefaction, and methods of making and using the same will become apparent as the following description of certain exemplary embodiments thereof proceeds.

Exemplary embodiments of our process for pre-liquefaction processing, apparatus for pre-liquefaction processing, system for hydrogen liquefaction, system for fluid liquefaction, and methods of making and using the same are shown in the drawings included herewith. It should be understood that like reference characters used in the drawings may identify like components.
Figure 1 is a block diagram of a first exemplary apparatus for liquefaction of hydrogen that includes a first exemplary embodiment of a pre-liquefaction processing system.
Figure 2 is a block diagram of a second exemplary apparatus for liquefaction of hydrogen that includes a second exemplary embodiment of a pre-liquefaction processing system.
Figure 3 is block diagram of the second exemplary apparatus for liquefaction of hydrogen that includes a first exemplary implementation of the first exemplary embodiment of a pre-liquefaction processing system.
Figure 4 is a block diagram of the second exemplary apparatus for liquefaction of hydrogen that includes a second exemplary implementation of the first exemplary embodiment of a pre-liquefaction processing system.
Figure 5 is a block diagram of the second exemplary apparatus for liquefaction of hydrogen that includes a third exemplary implementation of the first exemplary embodiment of a pre-liquefaction processing system.
Figure 6 is a block diagram of the second exemplary apparatus for liquefaction of hydrogen that includes a fourth exemplary implementation of the first exemplary embodiment of a pre-liquefaction processing system.
Figure 7 is a block diagram of a third exemplary apparatus for liquefaction of hydrogen that includes an exemplary embodiment of the pre-liquefaction processing system.
Figure 8 is a flow diagram of a first exemplary embodiment of a process for pre-liquefaction processing of hydrogen gas for feeding the hydrogen fluid to a train of liquefiers for liquefaction. Embodiments of the pre-liquefaction processing system and embodiments of the apparatus for liquefaction of hydrogen can utilize an embodiment of this process. For example, the embodiments illustrated in Figures 1-7 can implement an embodiment of this process.

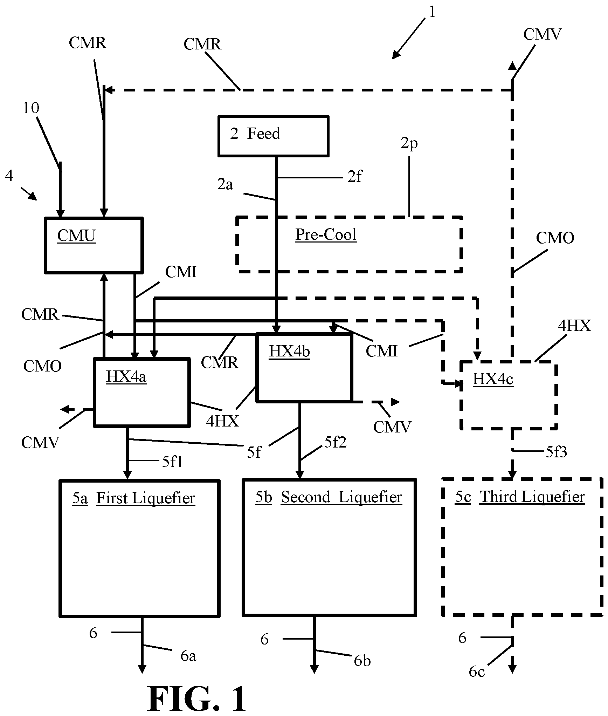

Referring to Figures 1-7, an apparatus for liquefaction of hydrogen 1 can include a pre-liquefaction processing system 4 that can be configured to facilitate pre-cooling of at least one flow of feed 2f output from at least one source of feed 2. In some embodiments, the feed 2 can be hydrogen gas or include hydrogen gas that is provided by one or more electrolyzers of a hydrogen production facility or can be hydrogen gas from a storage unit that receives hydrogen from such a hydrogen production facility and stores the hydrogen within one or more vessels of the storage unit for providing as feed 2 for liquefaction. The hydrogen production facility that can provide the feed 2 can be configured to produce hydrogen *via* electrolysis of water that is powered by at least one renewable power source (*e.g.*, solar power, hydroelectric power, wind power, *etc.*)*.*

The feed 2 can be provided by a source that only utilizes renewable energy (*e.g*., is a zero carbon hydrogen feed 2) or is a very low carbon source of feed (*e.g*., is a hydrogen feed 2 provided *via* a carbon capture based hydrogen production facility, a substantially renewable powered hydrogen production facility, *etc.*)*.* Such a source of feed 2 can include large variations in supply of feed due to inconsistent power availability (*e.g*., changes from high wind to low wind conditions for wind power, changes form cloudy to non-cloudy conditions for solar power, *etc.*)*.*

The hydrogen gas can be greater than 95 volume percent (vol%) hydrogen in some embodiments (*e.g*., at least 95 vol% hydrogen, between 97 vol% and 99.999 vol% hydrogen, *etc.*)*.* In some configurations, the hydrogen gas can also include other elements or impurities, such as water or oxygen. For example, there can be greater than 0 vol% water and less than 2 vol% water and also be between less than 2 vol% oxygen and greater than 0 vol% oxygen in the feed.

The feed 2 can be provided by a source that only utilizes renewable energy (*e.g*., is a zero carbon hydrogen feed 2) or is a very low carbon source of feed (*e.g*., is a hydrogen feed 2 provided *via* a carbon capture based hydrogen production facility, a substantially renewable powered hydrogen production facility, *etc.*)*.* Such a source of feed 2 can include large variations in supply of feed due to inconsistent power availability (*e.g*., changes from high wind to low wind conditions for wind power, changes form cloudy to non-cloudy conditions for solar power, *etc.*)*.*

A stream of hydrogen gas can be provided as the at least one flow of feed 2f to undergo pre-liquefaction cooling, or pre-cooling, that can occur upstream of a train of liquefiers positioned to liquify the feed (e.g., liquify the feed to form an entirely liquid stream). The pre-cooling can be provided *via* at least one heat exchanger positioned between liquefiers of a train of liquefiers 5 and the source of the feed 2. The at least one heat exchanger can include a heat exchanger (*e.g*., a heat exchanger HX1 of a common pre-liquefaction processing system 4 or a plurality of heat exchangers 4HX, that can each receive a cooling medium input flow (CMI) for cooling the feed *via* a common cooling medium unit CMU that provides the cooling medium to each of the heat exchangers. The cooling medium can be considered a refrigerant. Each pre-liquefaction processing system 4 can be arranged and configured to accommodate the large changes in availability of feed for providing of the cooling medium flows to the heat exchangers 4HX.

The one or more heat exchangers 4HX upstream of the train of liquefiers 5 can cool the flow of feed 2f to a pre-liquefaction temperature within a pre-selected liquefaction feed temperature range and output the pre-cooled feed at the pre-liquefaction temperature as at least one pre-cooled flow of feed 5f. For example, a suitable pre-liquefaction temperature can be within a pre-selected liquefaction feed temperature range of between -110°C and -200°C or between -170°C and -200°C. In embodiments where there are multiple heat exchangers 4HX, each heat exchanger can receive a portion of the feed to be pre-cooled to a suitable pre-liquefaction temperature and subsequently output a pre-cooled flow of feed 5f to feed to a liquefier of a train of liquefiers 5. The pre-liquefaction temperature can be a temperature that is defined so that each flow of feed 5f is mostly gas or entirely gas. In some embodiments, each flow can be entirely gas, be at least 95 volume precent (vol%) gas and no more than 5 vol% liquid, can be between 100 vol% gas and 90 vol% gas and be between 0 vol% liquid and 10 vol% liquid, or be between 80 vol% gas and 100 vol% gas and between 20 vol% liquid and 0 vol% liquid.

For example, a first heat exchanger HX4a can receive a first portion of the flow of feed 2f to cool the first portion and output a first pre-cooled flow of feed 5f1 for feeding to a first liquefier 5a and a second heat exchanger HX4b can receive a second portion of the flow of feed 2f to cool the second portion and output a second pre-cooled flow of feed 5f2 for feeding to a second liquefier 5b. These pre-cooled flows of feed 5f can be entirely gaseous or be substantially gaseous (*e.g*., be at least 80 vol% gas and no more than 20 vol% liquid, be 100 vol% gas, *etc.*)*.* Figure 1 illustrates an embodiment having such a configuration, for example. There can also be more than two heat exchangers in such an arrangement. For instance (and as shown in broken line in Figure 1), there can be a third heat exchanger HX4c positioned to receive a third portion of the flow of feed 2f to cool the third portion and output a third pre-cooled flow of feed 5f3 to a third liquefier 5c.

Each heat exchanger 4HX can receive a cooling medium input flow CMI from a cooling medium unit CMU that processes a cooling medium flow 10 received from a plant process or other device (*e.g*., nitrogen from an air separation unit, another type of refrigerant, *etc.*)*.* The cooling medium flow 10 can include a flow of nitrogen gas or other type of industrial gas (*e.g*., natural gas, *etc.*) that may be treated *via* the cooling medium unit CMU to suitably cool the gas to a cooling medium input temperature to provide the desired level of cooling at the one or more heat exchangers. The cooling medium unit CMU can include, for example, compressors and expanders, companders (*e.g*., devices that include an expander that is interlinked with at least one compressor stage to help power compression *via* the gas expansion provided by the expander), a cooling medium storage reservoir, and/or a cooling medium phase separator, for example. Each of these elements or a combination of these elements may be provided to process the received cooling medium flow 10 to cool that flow of a cooling medium to a desired temperature and/or retain the cooling medium for utilization in cooling operations at the one or more heat exchangers.

The cooling medium input flow(s) CMI output from the cooling medium unit CMU for feeding to the one or more heat exchangers can be warmed *via* the cooling that flow provides in the heat exchanger for cooling the hydrogen gas therein. The warmed cooling medium can be output from each heat exchanger as a warmed cooling medium output flow CMO. Each warmed cooling medium output flow CMO can have a temperature that is greater than the temperature of the cooling medium input flow CMI. The cooling medium output flow CMO can be vented *via* a venting conduit CMV as shown in broken line or recycled to the cooling medium unit CMU for cooling and/or storage *via* a suitable recycle conduit arrangement CMR positioned between the heat exchanger(s) and the cooling medium unit CMU.

Each liquefier of the train of liquefiers 5 can further cool and/or process the portion of the pre-cooled flow of feed 5f that it receives to form a liquefied stream 6. For example, the first liquefier 5a can output a first stream of liquified hydrogen 6a, the second liquefier can output a second stream of liquified hydrogen 6b, and the third liquefier 5c can output a third stream of liquified hydrogen 6c. Each liquified hydrogen stream 6 can include liquid hydrogen or be liquid hydrogen. The liquid hydrogen of each liquified hydrogen stream 6 can be at least 99.99 vol% hydrogen or between 99.99 vol% hydrogen and 100 vol% hydrogen. The liquified hydrogen stream 6 can include trace amounts of other elements (e.g., trace amounts of oxygen, argon, water, hydrocarbons, carbon monoxide and/or carbon dioxide).

Each liquefier of the train of liquefiers can include hydrogen liquefaction elements. The hydrogen liquefaction elements can include one or more expanders, one or more ortho-hydrogen to para-hydrogen converters and at least one liquefaction heat exchanger for cooling the hydrogen to a temperature at or below its phase transition temperature for forming liquid hydrogen. For example, each liquified hydrogen stream 6 can be cooled to a temperature that is below -252.8°C, -253°C, a temperature of between -240°C and -260°C or other pre-selected liquefaction temperature within a range of pre-selected liquefaction temperatures (*e.g*., a temperature of between -240°C and -260°C or other suitable liquefaction temperature range).

In some embodiments, the pre-liquefaction processing system 4 can also include at least one pre-cooling processing device 2p (Pre-Cool) positioned between the source of the feed 2 and the pre-cooling heat exchanger(s) (*e.g*., heat exchanger HX1, or array of respective heat exchangers 4HX, *etc.*)*.* The at least one pre-cooling processing device 2p can include a pre-purification unit (PPU) and/or a feed compression system.

The feed compression system FC of the pre-cooling processing device 2p can include one or more compressors configured to compress the hydrogen of the flow of the feed 2f to a desired feed pressure, for example.

The PPU of the pre-cooling processing device 2p can include one or more adsorbers that can include one or more beds of adsorbent material for removal of impurities from the flow of feed 2f. For example, the PPU can be configured to remove water, oxygen and/or hydrocarbons from the feed so the feed has a higher concentration of hydrogen output from the PPU before the flow of feed is fed to the one or more heat exchangers.

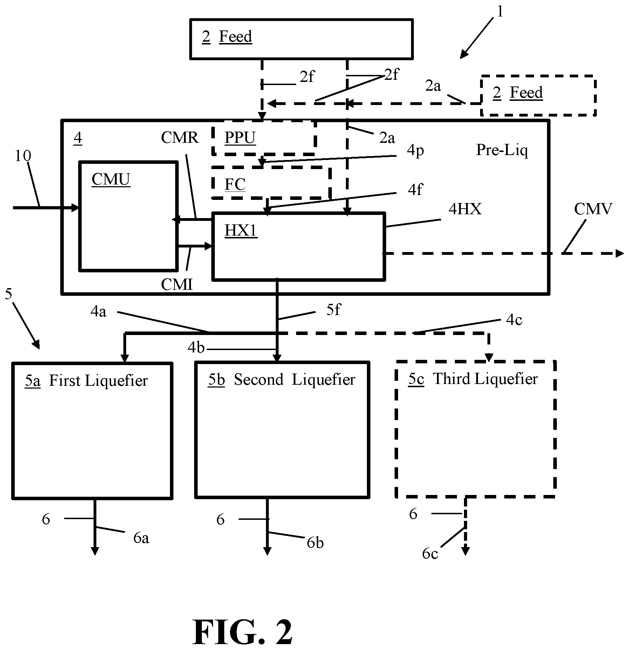

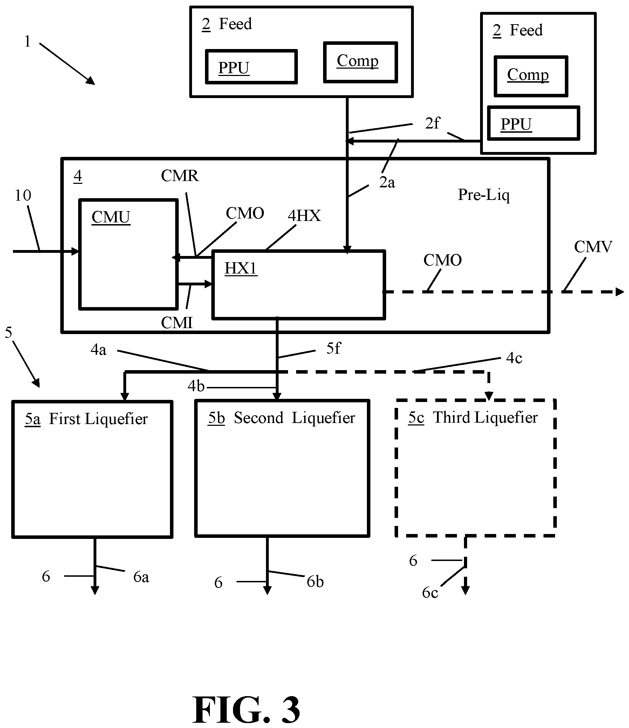

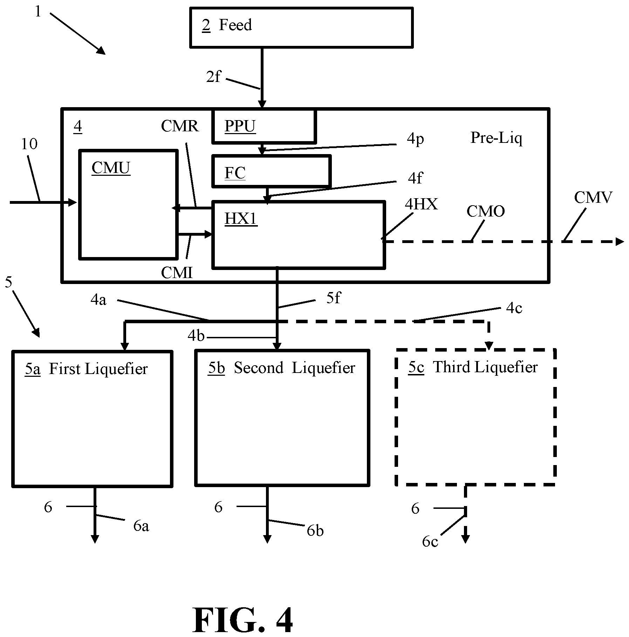

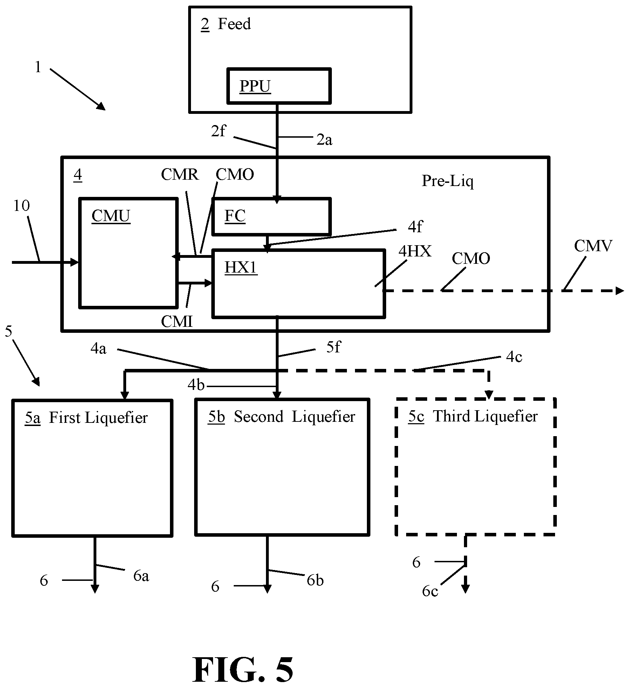

An exemplary arrangement in which the pre-liquefaction processing system 4 includes both a PPU and a feed compression system FC may best be seen from Figures 2 and 4. In alternative arrangements, the feed 2 from the source of the feed can be at a desired feed pressure already and/or have already undergone pre-purification to have a suitable purity level for feeding to the heat exchanger(s) of the pre-liquefaction processing system 4. For instance Figure 3 illustrates an exemplary embodiment in which the source of feed 2 can utilize a PPU and a compressor system (Comp) so that the feed provided to the pre-liquefaction processing system 4 has a desired hydrogen purity level and a pre-selected pressure within a pre-selected range of feed pressures (e.g., a pressure of between 1.1 bara to 40 bara, a pressure of not more than 50 bara, *etc.*)*.* As another example, Figure 5 illustrates an exemplary arrangement in which the feed 2 from the source of the feed can have already undergone pre-purification to have a suitable purity level for feeding to the heat exchanger(s) of the pre-liquefaction processing system 4 *via* a PPU and the pre-liquefaction processing system 4 (Pre-Liq) includes a feed compressor system FC to increase the pressure of the feed to the pre-selected pressure within a pre-selected range of feed pressures.

As discussed herein, embodiments of our apparatus, system, and process can provide significant improvements in operational flexibility, significantly improved profitability by reducing capital costs associated with liquefaction of hydrogen gas and also provide maintenance and safety benefits associated with implementation and operation. For example, feed from a renewable power-based hydrogen production facility can have significant variations in flow rates of hydrogen that may be produced. The production rates can range greatly over a large span of production capacities. As a result, liquefaction processing may need to account for a relatively low level of production and also be able to adapt to much larger levels of production that can occur intermittently in various unpredictable cycles that can be affected by weather or other factors (*e.g*., cloud days, lack of sufficient wind, *etc.*)*.* We surprisingly found that use of one or more common pre-liquefaction processing systems 4 can permit multiple liquefiers of a train of liquefiers to be operated more efficiently and effectively given a pre-selected minimum operational level that may be desired to avoid having to shut a liquefier down and subsequently restart it, which can be a very expensive and time-consuming operation that can result in substantial processing delays and lost hydrogen. Operational flexibility can be provided by permitting pre-liquefaction processing to occur *via* common equipment that can be sized to account for the large production variability while also permitting pre-cooled hydrogen to be provided to multiple liquefiers in a way that can permit each liquefier to continue to operate at a pre-selected minimum operational level (*e.g*., 20% of operational capacity, 25% of operational capacity, 30% of operational capacity, *etc.*) to a maximum operational level (*e.g*., 100% of operational capacity or close to 100% of operational capacity such as being within 3%-5% of full operational capacity, *etc.*)*.* Further, this type of operational flexibility was surprisingly found to permit smaller sized liquefier equipment to be utilized and also permit the liquefaction equipment to be operated much more efficiently, which is believed to help drive the surprising substantial efficiency improvements we have found to be providable by embodiments of our apparatus and process.

To help further illustrate the different types of operational flexibility and improved efficient performance that can be provided, a more detailed discussion of different exemplary embodiments and exemplary implementations of exemplary embodiments is further discussed herein.

Referring to Figure 1, the apparatus for liquefaction of hydrogen 1 can include a source of feed 2 that can provide a feed of hydrogen 2f to one or more pre-cooling heat exchangers 4HX of a pre-liquefaction processing system 4. The pre-cooling heat exchangers 4HX can each be configured as plate and fin heat exchanger, shell and tube heat exchanger, coil-wound heat exchanger, kettle type heat exchanger, or other suitable type of heat exchanger. In some embodiments, the pre-liquefaction processing system 4 can also include at least one pre-cooling processing device 2p (Pre-Cool). The pre-cooling processing device(s) can include feed pre-cooling processing equipment that can compress the feed to a suitable feed pressure and/or one or more purification devices to purify the feed to improve the hydrogen concentration of the feed to a desired hydrogen content that can be within a pre-selected hydrogen content range as noted above. For example, there can be a feed compression system (FC) and/or a PPU for pre-treating the feed 2f before that feed is fed to the pre-cooling heat exchanger(s) 4HX.

Each of the pre-cooling heat exchanges 4HX can receive a cooling medium input flow CMI from a cooling medium unit CMU. The cooling medium unit CMU can be arranged and configured to process a refrigerant flow or other type of cooling medium flow 10 it may receive from a plant process (*e.g*., nitrogen flow from an air separation unit (ASU) or a liquid natural gas flow from a natural gas processing device, *etc.*) The cooling medium unit CMU can include a common arrangement of cooling medium compressors, companders, storage vessel(s) and/or phase separators positioned to suitably cool the cooling medium to a desired cooling medium input temperature range for providing a desired level of cooling to the flow of feed 2f fed to each of the pre-cooling heat exchanger 4HX. The cooling medium can be output from the cooling medium unit CMU as a cooling medium input flow CMI so portions of the cooling medium input flow CMI are fed to different pre-cooling heat exchangers 4HX that can be arranged for pre-cooling portions of the feed 2f for feeding to different liquefiers of a train of liquefiers 5.

For example, a first portion of the cooling medium input flow CMI can be fed to a first heat exchanger HX4a of the pre-liquefaction processing system 4 for cooling a first portion of the hydrogen gas feed 2f to a suitable liquefaction feed temperature for outputting as a first pre-cooled flow of feed 5f1 that comprises hydrogen gas for feeding to a first liquefier 5a for forming a first stream of liquified hydrogen 6a. A second portion of the cooling medium input flow CMI can be fed to a second heat exchanger HX4b of the pre-liquefaction processing system 4 for cooling a second portion of the hydrogen gas feed 2f to a suitable liquefaction feed temperature for outputting as a second pre-cooled flow of feed 5f2 that comprises hydrogen gas for feeding to a second liquefier 5b for forming a second stream of liquified hydrogen 6b. As yet another example, a third portion of the cooling medium input flow CMI can be fed to a third heat exchanger HX4c of the pre-liquefaction processing system 4 for cooling a third portion of the hydrogen gas feed 2f to a suitable liquefaction feed temperature for outputting as a third pre-cooled flow of feed 5f3 that comprises hydrogen gas for feeding to a third liquefier 5c for forming a third stream of liquified hydrogen 6c.

It should be appreciated that the cooling medium unit CMU can be arranged to provide a flow of cooling medium to more than three pre-liquefaction pre-cooling heat exchangers of the pre-liquefaction processing system 4 or can be arranged to provide cooling medium for only two such heat exchangers. In some other embodiments, the pre-liquefaction processing system 4 can include multiple cooling medium units CMUs that can each provide a cooling medium input flow to multiple different respective heat exchangers 4HX as well.

As discussed above, each of the heat exchangers 4HX can output the warmed cooling medium as a warmed cooling medium output flow CMO that can be recycled back to the cooling medium unit CMU *via* a recycle conduit arrangement CMR positioned between the heat exchangers 4HX and the cooling medium unit CMU or can be vented to atmosphere or otherwise provided to other plant processing elements (*e.g.,* as a regeneration gas for an adsorber prior to being vented, use as another heat exchanger heating or cooling medium, *etc.*) *via* a warmed cooling medium output conduit CMV.

The utilization of the common cooling medium unit CMU can provide for improved operational efficiency and performance by permitting a cooling medium flow to be processed by common elements for providing cooling medium flows to multiple different pre-liquefaction heat exchangers 4HX that are upstream of liquefiers for feeding fluid to be liquified to respective liquefiers. Embodiments can provide operational flexibility that can permit improved operational performance and feed flow routing to help provide greater efficiency in liquefier operations to provide improved performance. Also, as liquefiers age or need maintained, the common cooling medium unit CMU can permit steady supply of cooling medium to other heat exchangers 4HX for more flexible operation that can accommodate such issues without detracting from utilization of such elements and can permit a reduction in overall capital costs by minimizing the number of elements that may be needed for liquefaction arrangements for liquifying a feed of hydrogen.

Referring to Figure 2 another embodiment of the apparatus for liquefaction of hydrogen 1 can be provided that can include a number of different implementation options that include providing a common cooling medium unit CMU as well as other common pre-liquefaction processing system elements for pre-cooling a feed of hydrogen to a suitable liquefaction feed temperature. Examples of implementations identified in Figure 2 can also be appreciated from Figures 3-6.

As can be seen from Figures 2-6, the apparatus can include a source of feed 2 that includes hydrogen gas as discussed above. The source of the hydrogen gas can include, for example, a plurality of electrolyzers that produce hydrogen gas *via* electrolysis of water that are powered by renewable energy (*e.g*., solar power, wind power and/or hydroelectric power, *etc.*)*.* There can be a plurality of sources of feed 2 in some embodiments as indicated by broken line in Figure 2 and shown in Figure 3. For example, different electrolyzer houses of a plant or different hydrogen gas producing facilities can be sources of feed 2.

At least one flow of feed 2f can be provided by the source(s) of feed 2. For example, a first flow of feed 2a can be output from a first source of feed 2 to provide hydrogen gas to a first pre-liquefaction processing system 4 for being pre-cooled to a suitable pre-selected liquefaction feed temperature prior to being fed to a train of liquefiers 5. The first flow of feed 2a can be fed to a heat exchanger 4HX of the pre-liquefaction processing system 4. The first heat exchanger HX1 of the pre-liquefaction processing system 4 can receive the first flow of feed 2a directly from the source of the feed 2 or can receive the feed of hydrogen gas after it has undergoing pre-purification and/or compression *via* a PPU and feed compressor FC of the pre-liquefaction processing system 4. For example, the flow of feed can be fed *via* a feed conduit directly from the source of the feed 2 to the heat exchanger HX1 or the first flow of feed 2a can be passed from the source of the feed 2 to the PPU of the pre-liquefaction processing system 4 (Pre-Liq) and subsequently compressed *via* a feed compression system (FC) before the feed is fed to the first heat exchanger HX1. A PPU output conduit 4p can be positioned between the PPU and the feed compression system FC and/or the PPU and the first heat exchanger HX1 to feed the purified feed to the compression system FC for undergoing compression and/or the first heat exchanger HX1 to undergo pre-cooling. There can also (or alternatively) be a feed compression system conduit 4f positioned between the feed compression system FC and the first heat exchanger HX1 for feeding the compressed feed to the first heat exchanger HX1 for undergoing pre-cooling after the feed is compressed to a pre-selected feed pressure as discussed above.

The pre-liquefaction processing system 4 can also include the cooling medium unit CMU that can receive the cooling medium flow 10 from a plant process (*e.g*., ASU, *etc.*) that for compression, storage and/or phase separation for cooling the cooling medium flow 10 and/or storing it for providing a sufficient cooling medium input flow CMI at a pre-selected cooling medium inlet temperature to the first heat exchanger HX1 for cooling the feed of hydrogen gas to a pre-selected liquefaction feed temperature. The warmed cooling medium flow CMO output from the heat exchanger can be recycled back to the cooling medium unit CMU *via* a recycle conduit CMR or can be vented or otherwise used as discussed above *via* a warmed cooling medium output conduit CMV connected to the first heat exchanger HX1.

The first heat exchanger HX1 can output a first pre-cooled flow of feed 5f at a suitable pre-selected liquefaction feed temperature for feeding to multiple liquefiers of a train of liquefiers 5. For instance, the first pre-cooled flow of feed 5f can be output at a suitable pre-liquefaction temperature can be within a pre-selected liquefaction feed temperature range of between - 110°C and -170°C, between -130°C and -160°C, or other suitable temperature range and different portions of this flow can be fed to different liquefiers of the train of liquefiers 5.

For example, a first portion of the first pre-cooled flow of feed 5f of hydrogen gas output from the first heat exchanger HX1 can be fed to a first liquefier 5a *via* a first liquefier feed conduit 4a positioned between the first heat exchanger HX1 and the first liquefier 5a. A second portion of the first pre-cooled flow of feed 5f of hydrogen gas output from the first heat exchanger HX1 can be fed to a second liquefier 5b *via* a second liquefier feed conduit 4b positioned between the first heat exchanger HX1 and the second liquefier 5b. Additional liquefiers can also receive portions of the first pre-cooled flow of feed 5f of hydrogen gas output from the first heat exchanger HX1. For example, a third portion of the first pre-cooled flow of feed 5f of hydrogen gas output from the first heat exchanger HX1 can be fed to a third liquefier 5c *via* a third liquefier feed conduit 4c positioned between the first heat exchanger HX1 and the third liquefier 5c. The first, second, and third liquefier feed conduits 4a, 4b, and 4c can be arranged to split from a first heat exchanger output conduit or can be connected to different heat exchanger outlets or output conduits.

Each liquefier can receive the portion of the pre-cooled flow of feed 5f it receives from the first heat exchanger HX1 and liquify that portion of hydrogen to form liquid hydrogen streams 6 for providing to a storage vessel and/or conduit for storage and/or supply of liquid hydrogen. For example, the first liquefier 5a can process the first portion of the first pre-cooled flow of feed 5f of hydrogen gas to form a first liquid hydrogen stream 6a, the second liquefier 5b can process the second portion of the first pre-cooled flow of feed 5f of hydrogen gas to form a second liquid hydrogen stream 6b, and (if present) the third liquefier 5c can process the third portion of the first pre-cooled flow of feed 5f of hydrogen gas to form a third liquid hydrogen stream 6c. These liquid hydrogen streams 6 can be merged and subsequently fed to a storage unit, each fed to different storage units, and/or or fed to another plant process for use of the liquid hydrogen.

As may be appreciated from Figure 3, some implementations may include a pre-liquefaction processing system 4 in which that pre-liquefaction processing system does not include a compression system and does not include a PPU. For example, the source of feed 2 for each source of feed can include a respective compression system (Comp) and pre-purification unit (PPU) for providing the flow of purified feed 2a to the pre-liquefaction processing system 4 to undergo cooling *via* the first heat exchanger HX1. In such an arrangement, each flow of feed of purified hydrogen gas 2a can be fed to the first heat exchanger HX1 to undergo cooling therein *via* a cooling medium provided by the cooling medium unit CMU as discussed above. The pre-cooled feed can be output from the first heat exchanger HX1 as the pre-cooled flow of feed 5f for being fed to different liquefiers of the train of liquefiers as discussed above.

Figure 4 illustrates an example implementation of the embodiment of Figure 2 in which the pre-liquefaction processing system 4 (Pre-Liq) includes a PPU and a feed compression system FC. A flow of feed 2f output from a source of feed 2 as discussed above can be fed to the PPU of the pre-liquefaction processing system 4 to undergo purification and subsequently be fed to a feed compression system FC *via* a PPU output conduit 4p for undergoing compression *via* the feed compression system FC. The compressed feed can be output from the feed compression system and fed to the first heat exchanger *via* a first heat exchanger feed conduit 4f connected between the feed compression system FC and the first heat exchanger HX1. The first heat exchanger HX1 can receive a cooling medium input flow CMI from the common cooling medium unit CMU as discussed above for cooling the compressed and purified flow of feed. The pre-cooled feed can be output from the first heat exchanger HX1 as the pre-cooled flow of feed 5f comprising hydrogen gas for being fed to different liquefiers of the train of liquefiers as discussed above.

Figure 5 illustrates an example implementation of the embodiment of Figure 2 in which the pre-liquefaction processing system 4 (Pre-Liq) includes a feed compression system FC. A flow of feed 2f output from a source of feed 2 as discussed above can be fed to the PPU of the source of feed for purification and subsequently fed to the pre-liquefaction processing system 4 to undergo compression *via* feed compression system FC and subsequent cooling *via* the first heat exchanger HX1. For example, the purified feed can be fed to the compression system FC *via* a compression system feed conduit positioned between the PPU of the source of the feed 2 and the compression system FC. The compressed feed can be output from the feed compression system FC and fed to the first heat exchanger HX1 *via* a first heat exchanger feed conduit 4f connected between the feed compression system FC and the first heat exchanger HX1. The first heat exchanger HX1 can receive a cooling medium input flow CMI from the common cooling medium unit CMU as discussed above for cooling the compressed and purified flow of feed. The pre-cooled feed can be output from the first heat exchanger HX1 as the pre-cooled flow of feed 5f comprising hydrogen gas for being fed to different liquefiers of the train of liquefiers as discussed above.

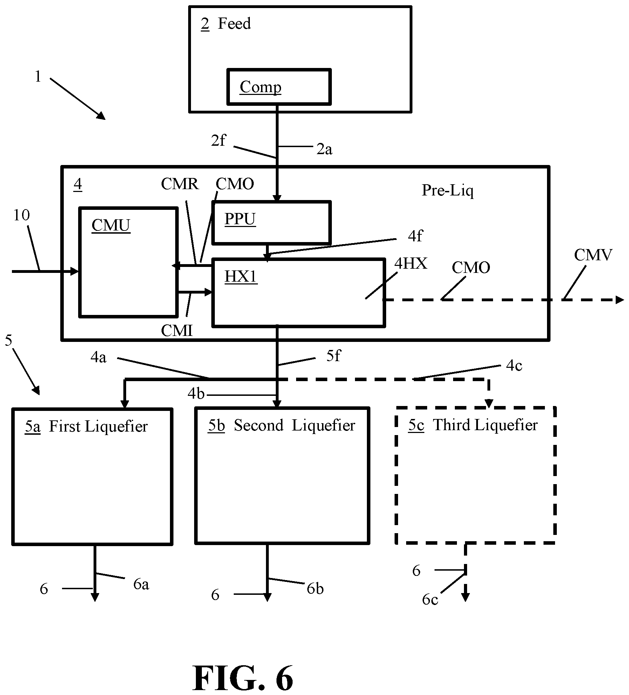

Figure 6 illustrates an example implementation of the embodiment of Figure 2 in which the pre-liquefaction processing system 4 (Pre-Liq) includes a PPU. A flow of feed 2f output from a source of feed 2 as discussed above can be fed to compression system (Comp) of the source of the feed 2 and subsequently be fed to the pre-liquefaction processing system 4 to undergo purification *via* the PPU of the pre-liquefaction processing system 4. The purified feed output from the PPU can be fed to the first heat exchanger *via* the first heat exchanger feed conduit 4f connected between the PPU of the pre-liquefaction processing system 4 and the first heat exchanger HX1. The first heat exchanger HX1 can receive a cooling medium input flow CMI from the common cooling medium unit CMU as discussed above for cooling the purified flow of feed. The pre-cooled feed can be output from the first heat exchanger HX1 as the pre-cooled flow of feed 5f comprising hydrogen gas for being fed to different liquefiers of the train of liquefiers as discussed above.

The utilization of the common cooling medium unit CMU and common first heat exchanger as well as the optional utilization of the common feed compression system FC and/or common PPU of the pre-liquefaction processing system 4 can provide for improved operational efficiency and performance by permitting a cooling medium flow to be processed by common elements for providing cooling medium flows to a pre-liquefaction heat exchanger 4HX that is upstream of the train of liquefiers 5 for feeding fluid to be liquified to respective liquefiers. Embodiments can provide operational flexibility that can permit improved operational performance and feed flow routing to help provide greater efficiency in liquefier operations to provide improved performance. Also, as liquefiers age or need maintained, the common pre-cooling processing elements of the pre-liquefaction processing system 4 (as well as the optional pre-cooling compression and purification elements) can permit a steady supply of at least one pre-cooled flow of feed 5f to liquefiers for more flexible operation that can accommodate such issues without detracting from utilization of such elements and can permit a reduction in overall capital costs by minimizing the number of such elements that may be needed for liquefaction arrangements for liquifying a feed of hydrogen.

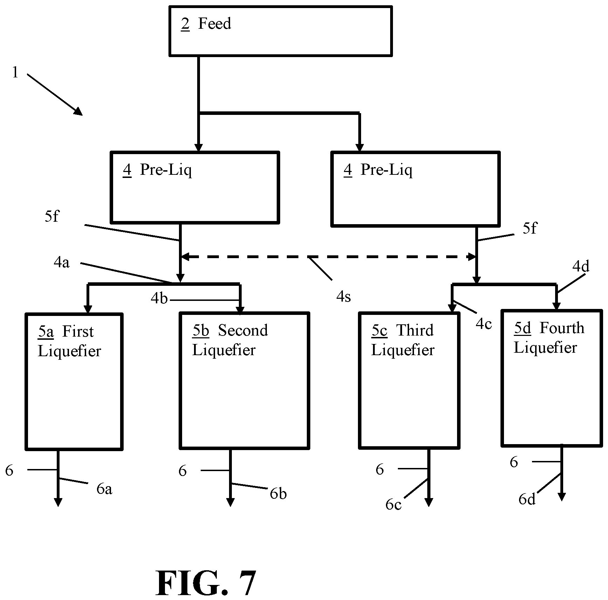

As discussed herein, embodiments of the pre-liquefaction processing system 4 (Pre-Liq) can be provided to support different sets of liquefiers of a train of liquefiers. Figure 7 illustrates embodiments of the pre-liquefaction processing system 4 that can provide pre-cooled flow of feed 5f to multiple different liquefiers of a train of liquefiers 5. The source of feed 2 can be one or more hydrogen production facilities that have one or more electrolyzer houses that provide hydrogen gas formed *via* electrolysis powered by one or more renewable energy sources. The flow of feed 2f can be fed to different pre-liquefaction processing systems 4 that can be arranged to primarily output pre-cooled flow of feed 5f for respective liquefiers of a train of liquefiers for forming liquid hydrogen. For example, a first pre-liquefaction processing system 4 can form a first pre-cooled flow of feed 5f for providing a first portion of this flow to a first liquefier 5a for forming a first stream of liquid hydrogen 6a *via* a first liquefier feed conduit 4a and a second portion of the flow to a second liquefier 5b for forming a second stream of liquid hydrogen 6b *via* a second liquefier feed conduit 4b. The first liquefier feed conduit 4a can be connected between the first heat exchanger HX1 of the first pre-liquefaction processing system 4 and the first liquefier 5a and the second liquefier feed conduit 4b can be connected between the first heat exchanger HX1 of the first pre-liquefaction processing system 4 and the second liquefier 5b.

A second pre-liquefaction processing system 4 can form a second pre-cooled flow of feed 5f for providing a first portion of this flow to a third liquefier 5c for forming a third stream of liquid hydrogen 6c *via* a third liquefier feed conduit 4c and a second portion of the flow to a fourth liquefier 5d for forming a fourth stream of liquid hydrogen 6d *via* a fourth liquefier feed conduit 4d. The third liquefier feed conduit 4c can be connected between the first heat exchanger HX1 of the second pre-liquefaction processing system 4 and the third liquefier 5c and the fourth liquefier feed conduit 4d can be connected between the first heat exchanger HX1 of the second pre-liquefaction processing system 4 and the fourth liquefier 5d. The first, second, third, and fourth liquefiers can liquify the hydrogen received from the pre-liquefaction processing systems 4 for forming liquid hydrogen streams 6 for feeding to a storage vessel and/or other plant process.

There can also be a redundancy feed conduit 4s positioned between the pre-liquefaction processing systems 4 and the liquefiers of the train of liquefiers. The redundancy feed conduit 4s can be positioned so that the first pre-liquefaction processing system 4 can provide a pre-cooled flow of feed 5f to the third liquefier 5c and/or fourth liquefier 5d. The redundancy feed conduit 4s can also be positioned so that the second pre-liquefaction processing system 4 can provide a pre-cooled flow of feed 5f to the first liquefier 5a and/or second liquefier 5b. This type of redundancy conduit 4s can provide additional processing flexibility to account for pre-liquefaction processing system maintenance issues and/or account for reduced levels of hydrogen production from one or more sources of feed so that the different pre-liquefaction processing system elements and liquefiers can have their operations adjusted in to operate more efficiently and flexibly to account for hydrogen supply and/or maintenance type issues that can arise during operations.

Embodiments can be provided that can utilize one or more CMUs to provide cooling medium to multiple pre-liquefaction system 4 heat exchangers for pre-cooling flows of the feed 2. In embodiments where there may be multiple CMUs in which there are also less total CMUs as compared to pre-liquefaction system heat exchangers 4HX, embodiments can be configured to utilize a common header to help distribute the flows of the cooling medium being fed to the different heat exchangers. For example, in embodiments where there can be two CMUs and three or more heat exchangers 4HX, a common header conduit can be positioned to that receive the cooling medium flows output from the different CMUs for feeding the cooling medium input flows (CMI) to the different heat exchangers. The common header conduit can be positioned and configured to mix the different cooling medium input flows output by the different CMUs to form a mixed stream that can subsequently be split for feeding to the different heat exchangers 4HX. For example, the header conduit can be arranged and positioned to split the mixed cooling medium stream up into multiple different streams to be fed to the three or more heat exchangers 4HX. The common header conduit can be connected between the different CMUs and different pre-liquefaction system heat exchangers 4HX. In some embodiments, the common cooling medium header conduit can include at least one mixing device (*e.g*., in-line mixer, mixing vessel, *etc.*) for mixing the cooling medium flows output from the different CMUs to form the mixed cooling medium input flow (CMI) for feeding to the different heat exchangers 4HX.

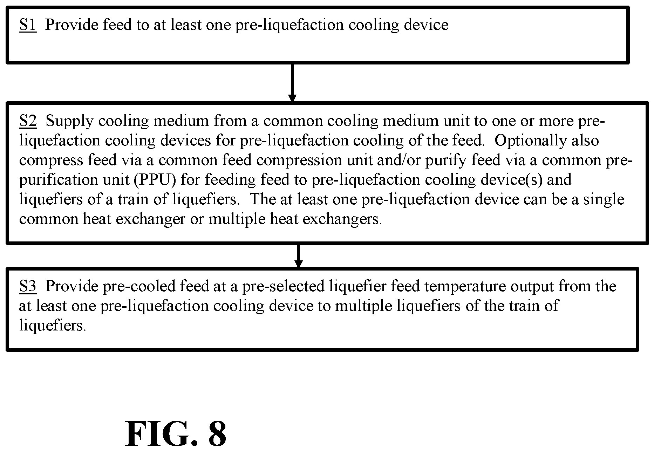

Embodiments of our pre-liquefaction processing system 4 and apparatus for hydrogen liquefaction 1 can be configured to implement an embodiment of our process for pre-liquefaction processing of hydrogen gas, an exemplary embodiment of which is shown in Figure 8. For example, in a first step S1, a feed of hydrogen gas can be provided to at least one pre-liquefaction cooling device (*e.g*., a heat exchanger 4HX, *etc.*)*.* In a second step S2, a cooling medium from a common cooling medium unit CMU can be supplied to one or more pre-liquefaction heat exchangers (*e.g*., first heat exchanger HX1 or first, second and/or third heat exchangers HX4a-HX4c, *etc.*)*.* Optionally, the feed can be compressed *via* a common compression system (*e.g*., pre-liquefaction processing system feed compression system FC) and/or purified *via* a pre-purification unit (e.g., PPU of a pre-liquefaction processing system) before that feed undergoes cooling *via* the one or more pre-liquefaction heat exchangers.

In a third step S3, the pre-cooled feed at a pre-selected liquefier feed temperature output from the one or more heat exchangers can be fed to liquefiers of a train of liquefiers. For example, in situations where there are multiple pre-liquefaction heat exchangers, each heat exchanger can feed a flow of pre-cooled feed to a respective one or more liquefiers as discussed above. As another example, a heat exchanger of a pre-liquefaction processing system 4 can output a pre-cooled feed for feeding portions of that pre-cooled feed to different liquefiers as discussed above.

Embodiments of our process can also include other steps. For example, embodiments can include retrofitting a pre-existing facility to include an embodiment of our pre-liquefaction processing system 4 and/or apparatus for liquefaction of hydrogen 1. As another example, embodiments can include installing an embodiment of our pre-liquefaction processing system 4 and/or apparatus for liquefaction of hydrogen 1 and then operating the installed system or apparatus to facilitate pre-cooling of a feed of hydrogen gas for subsequently undergoing liquefaction *via* a train of liquefiers. Embodiments of our process can also include other steps or features as may be appreciated from the above discussion of exemplary embodiments of our pre-liquefaction processing system 4 and apparatus for liquefaction of hydrogen 1.

For example, embodiments of the process can also include providing of cooling medium input flows (CMIs) from multiple CMUs to provide cooling medium to multiple pre-liquefaction system 4 heat exchangers 4HX for pre-cooling flows of the feed 2. In embodiments where there may be multiple CMUs in which there are also less total CMUs as compared to pre-liquefaction system heat exchangers 4HX, embodiments of the process can include feeding the cooling medium input flows output from the different CMUs to a common header to help distribute the flows of the cooling medium being fed to the different heat exchangers 4HX. For example, in embodiments where there can be two CMUs and three or more heat exchangers 4HX, embodiments of the process can include feeding the different flows of cooling medium from the CMUs to a common header conduit positioned between the CMUs and the different heat exchangers. The common header conduit can be positioned and configured so that the process also includes mixing the different cooling medium input flows output by the different CMUs to form a mixed cooling medium stream that can subsequently be split for feeding to the different heat exchangers 4HX for pre-cooling the feed. The mixing of the different cooling medium flows can be provided *via* at least one mixing device (*e.g*., in-line mixer, mixing vessel, *etc.*) of the common header conduit for mixing the cooling medium flows output from the different CMUs to form the mixed cooling medium input flow (CMI) for being subsequently split for feeding to the different heat exchangers 4HX.

As discussed herein, the utilization of the common cooling medium unit CMU as well as other common pre-liquefaction processing elements can provide for improved operational efficiency and performance by permitting a cooling medium flow and feed to be processed by common elements for pre-cooling the feed to a suitable temperature and/or pressure and/or purity level for undergoing liquefaction. Embodiments can provide operational flexibility that can permit improved operational performance and feed flow routing to help provide greater efficiency in liquefier operations to provide improved performance. Also, as liquefiers age or need maintained, the common pre-liquefaction processing elements of the pre-liquefaction processing system can permit steady supply of cooling medium and/or pre-cooled feed for more flexible operation that can accommodate such issues without detracting from utilization of such elements and can permit a reduction in overall capital costs by minimizing the number of elements that may be needed for liquefaction arrangements for liquifying a feed of hydrogen.

In some embodiments, it was surprisingly found that energy efficiency improvements of between 2% and 10% can be provided, which can provide a significant improvement. For example, this type of improvement can be equivalent to 2 MW to 10 MW for an embodiment included in a facility that may require 100 MW of power, which can provide an improvement in operational efficiency that equates to millions of dollars of value in terms of increased efficiency in hydrogen production and/or reduction in energy usage while also providing an improvement in operational flexibility. For example, embodiments can be provided so that the energy savings that can be achieved can be provided for improved hydrogen production *via* the source of the feed and/or a reduction in operational cost and improved use of renewable energy while also providing a reduction in capital costs that can make utilization of renewable power for hydrogen production more cost effective for more widespread utilization of renewable power sources.

It should be appreciated that modifications to the embodiments explicitly shown and discussed herein can be made to meet a particular set of design objectives or a particular set of design criteria. For instance, the arrangement of valves, piping, and other conduit elements (*e.g*., conduit connection mechanisms, tubing, seals, *etc.*) for interconnecting different units of the plant for fluid communication of the flows of fluid between different elements (*e.g*., pumps, conduits, valves, *etc.*) can be arranged to meet a particular plant layout design that accounts for available area of the plant, sized equipment of the plant, and other design considerations. As another example, the flow rate, pressure, and temperature of the fluid passed through the various apparatus or system elements can vary to account for different design configurations and other design criteria.

Embodiments of a plant, the apparatus for pre-liquefaction processing, process for pre-liquefaction processing, system for hydrogen liquefaction, and/or system for fluid liquefaction can each be configured to include process control elements positioned and configured to monitor and control operations (*e.g*., temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the plant, *etc.*)*.*

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the process, apparatus, system and methods of making and using the same have been shown and described above, it is to be distinctly understood that the invention is not limited thereto but may be otherwise variously embodied and practiced within the scope of the following claims.

## Claims

1. An apparatus for liquefaction of hydrogen, comprising:
a pre-liquefaction processing system positioned to receive at least one flow of feed comprising hydrogen gas to cool the at least one flow of feed to form at least one pre-cooled flow of feed at a temperature within a pre-selected liquefaction feed temperature range for feeding the at least one pre-cooled flow of feed to a plurality of liquefiers of a train of liquefiers; the pre-liquefaction processing system including a cooling medium unit (CMU) positioned upstream of at least one heat exchanger to feed a cooling medium to the at least one heat exchanger for cooling of the at least one flow of feed to form the at least one pre-cooled flow of feed, the at least one heat exchanger positioned between the liquefiers and a source of the feed to receive the at least one flow of feed for cooling the at least one flow of feed *via* the cooling medium,
wherein the at least one pre-cooled flow of feed is optionally comprised entirely of gas or is comprised of at least 95 volume percent (vol%) gas and no more than 5 vol% liquid.

2. An apparatus according to Claim 1, wherein the at least one heat exchanger comprises a first heat exchanger and the at least one pre-cooled flow of feed includes a first pre-cooled flow of feed output from the first heat exchanger.

3. An apparatus according to Claim 2, wherein the plurality of liquefiers of the train of liquefiers includes a first liquefier and a second liquefier and the first heat exchanger is connected to the first liquefier and the second liquefier such that a first portion of the first pre-cooled flow of feed outputtable from the first heat exchanger is feedable to the first liquefier and a second portion of the first pre-cooled flow of feed outputtable from the first heat exchanger is feedable to the second liquefier.

4. An apparatus according to Claim 2, wherein the plurality of liquefiers of the train of liquefiers includes a first liquefier, a second liquefier, and a third liquefier and the first heat exchanger is connected to the first liquefier, the second liquefier, and the third liquefier such that a first portion of the first pre-cooled flow of feed outputtable from the first heat exchanger is feedable to the first liquefier, a second portion of the first pre-cooled flow of feed outputtable from the first heat exchanger is feedable to the second liquefier, and a third portion of the first pre-cooled flow of feed outputtable from the first heat exchanger is feedable to the third liquefier.

5. An apparatus according to Claim 1 or Claim 2, wherein the at least one heat exchanger comprises a first heat exchanger and a second heat exchanger, the first heat exchanger positioned to receive a first portion of the at least one flow of feed and the second heat exchanger positioned to receive a second portion of the at least one flow of feed, and the at least one pre-cooled flow of feed includes a first pre-cooled flow of feed outputtable from the first heat exchanger and a second pre-cooled flow of feed outputtable from the second heat exchanger;
wherein the CMU is positioned to feed the cooling medium to the first heat exchanger and the second heat exchanger;
the first heat exchanger being connected to a first liquefier of the plurality of liquefiers of the train of liquefiers to feed the first pre-cooled flow of feed outputtable from the first heat exchanger to the first liquefier; and
the second heat exchanger being connected to a second liquefier of the plurality of liquefiers of the train of liquefiers to feed the second pre-cooled flow of feed outputtable from the second heat exchanger to the second liquefier.

6. An apparatus according to Claim 5, wherein the at least one heat exchanger also comprises a third heat exchanger positioned to receive a third portion of the at least one flow of feed and the at least one pre-cooled flow of feed includes a third pre-cooled flow of feed outputtable from the third heat exchanger;
wherein the CMU is positioned to feed the cooling medium to the third heat exchanger; and
the third heat exchanger being connected to a third liquefier of the plurality of liquefiers of the train of liquefiers to feed the third pre-cooled flow of feed outputtable from the third heat exchanger to the third liquefier.

7. An apparatus according to any of Claims 1 to 6, wherein the pre-liquefaction processing system also comprises:
a pre-purification unit (PPU) positioned upstream of the at least one heat exchanger to purify the at least one flow of feed and/or a feed compression system positioned upstream of the at least one heat exchanger for compressing the at least one flow of feed to a pressure within a pre-selected range of feed pressures,
wherein the pre-liquefaction processing system optionally includes the feed compression system and the PPU.

8. An apparatus according to Claim 7, comprising:
a source of feed, the source of feed comprising a hydrogen production facility that generates hydrogen gas *via* renewable power; and
the train of liquefiers.

9. A process for pre-cooling at least one flow of feed comprising hydrogen gas for providing pre-cooled hydrogen gas for liquefaction of the hydrogen gas, the process comprising:
supplying a cooling medium from a common cooling medium unit (CMU) to at least one pre-liquefaction cooling device for cooling a feed comprising hydrogen gas *via* the at least one pre-liquefaction cooling device; and
cooling the hydrogen gas *via* the at least one pre-liquefaction cooling device with the cooling medium supplied by the CMU to provide a pre-cooled feed comprising hydrogen gas at a pre-selected liquefier feed temperature,
the process optionally comprising:
feeding the pre-cooled feed to multiple liquefiers of a train of liquefiers for liquefaction of the hydrogen gas to form liquid hydrogen.

10. An process according to Claim 9, wherein the at least one pre-liquefaction cooling device comprises a first heat exchanger;
wherein the cooling of the hydrogen gas *via* the at least one pre-liquefaction cooling device with the cooling medium supplied by the CMU to provide the pre-cooled feed comprising hydrogen gas at a pre-selected liquefier feed temperature comprises:
cooling at least a portion of the at least one flow of feed in the first heat exchanger *via* the cooling medium supplied from the CMU; and
wherein the feeding of the pre-cooled feed to the multiple liquefiers of the train of liquefiers for liquefaction of the hydrogen gas to form liquid hydrogen comprises:
feeding a first portion of the pre-cooled feed from the first heat exchanger to a first liquefier of the multiple liquefiers of the train of liquefiers and feeding a second portion of the pre-cooled feed from the first heat exchanger to a second liquefier of the multiple liquefiers of the train of liquefiers.

11. A process according to Claim 10, wherein the at least one pre-liquefaction cooling device comprises a first heat exchanger and a second heat exchanger;
wherein the cooling of the hydrogen gas *via* the at least one pre-liquefaction cooling device with the cooling medium supplied by the CMU to provide the pre-cooled feed comprising hydrogen gas at a pre-selected liquefier feed temperature comprises:
cooling a first portion of the at least one flow of feed in the first heat exchanger *via* the cooling medium supplied from the CMU; and
cooling a second portion of the at least one flow of feed in the second heat exchanger *via* the cooling medium supplied from the CMU; and
wherein the feeding of the pre-cooled feed to the multiple liquefiers of the train of liquefiers for liquefaction of the hydrogen gas to form liquid hydrogen comprises:
feeding a first pre-cooled flow of feed output from the first heat exchanger to a first liquefier of the multiple liquefiers of the train of liquefiers and feeding a second pre-cooled flow of feed output from the second heat exchanger to a second liquefier of the multiple liquefiers of the train of liquefiers.

12. A process according to Claim 11, wherein the at least one pre-liquefaction cooling device comprises a third heat exchanger;
wherein the cooling of the hydrogen gas *via* the at least one pre-liquefaction cooling device with the cooling medium supplied by the CMU to provide the pre-cooled feed comprising hydrogen gas at a pre-selected liquefier feed temperature comprises:
cooling a third portion of the at least one flow of feed in the third heat exchanger *via* the cooling medium supplied from the CMU; and
wherein the feeding of the pre-cooled feed to the multiple liquefiers of the train of liquefiers for liquefaction of the hydrogen gas to form liquid hydrogen comprises:
feeding a third pre-cooled flow of feed output from the third heat exchanger to a third liquefier of the multiple liquefiers of the train of liquefiers.

13. A process according to any of Claims 9 to 12, wherein the CMU and the at least one pre-liquefaction cooling device are included in a pre-liquefaction processing system positioned upstream of a train of liquefiers.

14. A process according to Claim 13, wherein the pre-liquefaction processing system also includes a PPU and/or a feed compression system,
the process optionally comprising:
compressing the hydrogen gas before the hydrogen gas is fed to the at least one pre-liquefaction cooling device and/or
purifying the hydrogen gas before the hydrogen gas is fed to the at least one pre-liquefaction cooling device.

15. A process according to Claim 14, wherein the hydrogen gas of the at least one flow of feed is in a range from 95 volume percent (vol%) of the at least one flow of feed to 100 vol% of the at least one flow of feed and the hydrogen gas is provided *via* at least one hydrogen production facility that forms the hydrogen gas *via* at least one renewable power source.
